# EUROPEAN PATENT APPLICATION

(11) **EP 3 945 304 A1**
(43) Date of publication of application: **02.02.2022**
(21) Application number: 20188153.9
(22) Date of filing: 28.07.2020
(51) Int. Cl.: G01N 21/15, B08B 3/00, B08B 9/00, G01N 1/20, G01N 21/05, G01N 35/00, G01N 21/11, G01N 21/64, G01N 21/65

(54) **ANALYSIS SYSTEM WITH CLEANING DEVICE**

(71) Applicant: Artha AG, 8952 Schlieren (CH)
(72) Inventor: PFIFFNER, Peter, 8704 Herrliberg (CH); DENZLER, Daniel, 6030 Ebikon (CH)
(74) Representative: Zimmermann & Partner Patentanwälte mbB

(57) **Abstract**

Embodiments of an analysis system for analysing of components in a test liquid and a method for method for analysing of components in a test liquid are provided herein. The analysis system comprises a sample chamber, a liquid supply system, a spectroscopy system for spectroscopic analysis; and a controller, wherein the controller is adapted for controlling the analysis system to carry out repeated analysis cycles with rest periods between the analysis cycles. The controlling to carry out the analysis cycle comprises controlling the valve system to open and close a test liquid flow for supplying the test liquid to the sample chamber; and controlling the spectroscopy system. The controlling to carry out the rest period comprises controlling the valve system to open and close the cleaning liquid flow. A cleaning dwell time of the cleaning liquid in the sample chamber during the rest period is longer than a test dwell time of the test liquid in the sample chamber during the analysis cycle.

## Description

### FIELD OF THE INVENTION

The present disclosure relates to an analysis system for analysing of components in a test liquid. Further embodiments relate to a method for analysing of components in a test liquid.

### BACKGROUND OF THE INVENTION

Large scale industrial applications involving the treatment or production of liquids or in another manner including liquids for manufacturing purposes usually require some form of quality control of the liquids, i.e. a continuous monitoring of the cleanliness and the type and amounts of components or contaminants in the liquid. Examples of such large scale industrial applications are sewage water treatment, and the food, beverage or drug industry. The quality control for such large scale industrial applications is particularly demanding due to large amounts of components, or contaminants, being contained in the liquid samples.

State-of-the-art methods for the quality control of test liquids include classical chemical analysis techniques. Classical chemical analysis techniques typically comprise the steps of sampling, and subsequently separating the individual components by means of chromatography (e.g. gas or liquid chromatography) and detection of the individual components. Usually the detection step is not sensitive enough and not selective enough without carrying out the other steps. Online detectors are commonly based on the measurement of physical and/or chemical properties, e.g. heat conductivity (e.g. flow controllers), or heat of combustion (e.g. in many hydrogen sensors). These online detectors are usually not chemically selective.

There are a number of systems and methods for qualitative and quantitative analysis of test liquids, wherein the detection step can be carried out directly, i.e. without the need for sampling, and separation of individual components. However, these methods suffer from various drawbacks. For example, UV-VIS spectroscopy has a rather low chemical selectivity, although the sensitivity can be very high and therefore usually leads to limited insight when multiple components are present in a test sample. Infrared spectroscopy is a very promising technique, but suffers from a relatively low sensitivity for aqueous samples, and is non-sensitive for specific compounds, for example carbon such as soot or conductive samples. Classical Raman spectroscopy is also a very promising method. Furthermore, the sensitivity is less affected when the test sample is an aqueous sample. However, Raman spectroscopy suffers from a generally low sensitivity, which is due to the overall low cross section, and in addition due to a high fluorescence background.

Sewage water analysis is an application for which it is apparent that current state-of-the-art methods for qualitative and quantitative analysis of test samples are non-satisfactory. Sewage water treatment plants have to use elaborated cleaning stages in addition to mechanical and biological treatments to remove environmentally problematic contaminants.

Typical processes are based on initial treatment stages for removing larger contaminants (macro pollutants) as well as partially removing micro pollutants such as sand filtration, and further based on micropollutant treatment stages such as membrane processes, osmosis, ozonolysis or active carbon filters. Sewage water treatment plants require monitoring and managing the performance of all cleaning stages (such as the exemplary aforementioned cleaning stages). Currently, the only available real-time measurement is UV-absorbance spectrometry, which has very limited chemical selectivity. Chemically selective information can currently only be obtained from ex-situ, lab-based measurements of (sewage) water samples. A fast feedback to react to spontaneously occurring pollutants is thus impossible.

Another major problem in state of the art methods applied in large scale industrial production facilities is the need to maintain a certain level of cleanliness in the analysis system to obtain reliable results for a qualitative and quantitative analysis of test samples. Many industrial applications, including the aforementioned fields, include a high level of components or contaminants in the process liquids, which result in depositions, the growth of biofilms and the like in the analysis system. Servicing and replacing parts of the analysis system is time consuming and results in additional costs.

### BRIEF SUMMARY OF THE INVENTION

In view of the above, there is a need for a system and a method to perform qualitative and quantitative analysis of test liquids over extended periods of time, while, in particular automatically, maintaining a level of cleanliness even for highly demanding industrial applications involving highly contaminated liquids. In addition, there is also a need for an analysis system, wherein the system is chemically selective and separation of individual components of the test sample prior to analysis of the test sample is not required. In particular, there is a need for a system which is highly selective to components in the test liquid and wherein the system is substantially insensitive with respect to the main solvent present in the test sample, in particular water. Further, there is a need for a system, which can differentiate between possible contributions of individual components of the test sample and/or which is highly sensitive and therefore also suitable for detecting very low concentrated components/contaminants.

Briefly, an analysis system and a method for analysing of components in a test liquid are provided to overcome at least some of the abovementioned limitations. This object is accomplished by means of an analysis system according to claim 1 and a method according to claim 15.

According to an embodiment of the present disclosure, an analysis system for analysing of components in a test liquid is provided. The analysis system comprises a sample chamber being adapted for holding the test liquid to be analysed, the sample chamber having a transparent wall portion; and a liquid supply system for supplying the test liquid to the sample chamber. The analysis system further comprises a spectroscopy system for spectroscopic analysis of the test liquid being held in the sample chamber, the spectroscopy system including a radiation source for irradiating the test liquid in the sample chamber by an excitation beam penetrating through the transparent wall portion; and a controller. The liquid supply system is further adapted for supplying a cleaning liquid to the sample chamber. Further, the liquid supply system comprises a valve system for opening and closing a test liquid flow of the test liquid to the sample chamber, and for opening and closing a cleaning liquid flow of the cleaning liquid to the sample chamber. The controller is adapted for controlling the analysis system to carry out repeated analysis cycles with rest periods between the analysis cycles. The controlling to carry out the analysis cycle comprises controlling the valve system to open the test liquid flow for supplying the test liquid to the sample chamber; controlling the spectroscopy system to irradiate the test liquid in the sample chamber by the excitation beam through the transparent wall portion, and to carry out the spectroscopic analysis of the test liquid being held in the sample chamber; and controlling the valve system to close the test liquid flow for stopping the flow of the test liquid to the sample chamber. The controlling to carry out the rest period comprises controlling the valve system to open the cleaning liquid flow for supplying the cleaning liquid to the sample chamber; and controlling the valve system to close the cleaning liquid flow. A cleaning dwell time of the cleaning liquid in the sample chamber during the rest period is longer than a test dwell time of the test liquid in the sample chamber during the analysis cycle.

According to another embodiment of the present disclosure, a method for analysing of components in a test liquid is provided. The method comprises an analysis system having a sample chamber adapted for holding the test liquid to be analysed; a liquid supply system for supplying the test liquid to the sample chamber for supplying a cleaning liquid to the sample chamber; and a spectroscopy system for spectroscopic analysis of the test liquid being held in the sample chamber. The spectroscopy system includes a radiation source for irradiating the test liquid in the sample chamber by an excitation beam. The method comprises carrying out repeated analysis cycles with rest periods between the analysis cycles. The step of carrying out the analysis cycle comprises opening a test liquid flow for supplying the test liquid to the sample chamber; irradiating the test liquid in the sample chamber by the excitation beam through a transparent wall portion in the sample chamber, and carrying out the spectroscopic analysis of the test liquid being held in the sample chamber; and closing the test liquid flow for stopping the flow of the test liquid to the sample chamber. The step of carrying out the rest periods comprises opening a cleaning liquid flow for supplying the cleaning liquid to the sample chamber; and closing the cleaning liquid flow. A cleaning dwell time of the cleaning liquid in the sample chamber during the rest period is longer than a test dwell time of the test liquid in the sample chamber during the analysis cycle.

### BRIEF DESCRIPTION OF THE DRAWINGS

The parts shown in the Figures are not necessarily to scale, instead emphasis being placed upon illustrating the principles of the invention. Moreover, in the Figures, like reference signs designate corresponding parts. In the drawings:
Figure 1 schematically illustrates an analysis system according to an embodiment of the present disclosure.
Figure 2 schematically illustrates a spectroscopy system according to an embodiment of the present disclosure.

### DETAILED DESCRIPTION OF THE INVENTION

In the following detailed description, reference is made to the accompanying drawings, which form a part hereof, and in which are shown by way of illustration specific embodiments in which the invention may be practiced.

As used herein, the terms "having", "containing", "including", "comprising" and the like are open ended terms that indicate the presence of stated elements or features, but do not preclude additional elements or features.

It is to be understood that other embodiments may be utilised and structural or logical changes may be made without departing from the scope of the present invention. The following detailed description, therefore, is not to be taken in a limiting sense, and the scope of the present invention is defined by the appended claims. The embodiments described herein use specific language, which should not be construed as limiting the scope of the appended claims.

According to a general aspect of the present disclosure, the analysis system is an automatic or automated analysis system. The term "automatic" is to be understood such that - if appropriate after an initialisation step, which for example may comprise providing the test liquid in a sample chamber and/or starting a software application - the analysis of components (e.g., contaminants or other substances dissolved or suspended in the liquid) in the test liquid is conducted without the necessity for a user to engage with the system. This includes any steps of measurement and analysis with the spectroscopy system as well as calibration steps, but likewise any steps of supplying and removing the test liquid and the cleaning liquid to and from the sample chamber by means of the liquid supply system and any steps of cleaning or rinsing the sample chamber and/or the liquid supply system. The analysis system is provided in such a manner that, after installation, there is no need for a user to engage with any major parts of the system, apart from possibly adjusting software settings, such as for example determining freely selectable time intervals at which measurements should be carried out.

According to another general aspect of the present disclosure, the analysis system is an inline analysis system. The term "inline" or "inline measurement" is to be understood such that the test liquid is provided in a flow-through system. The analysis system is configured to draw the test liquid from a large (industrial) scale liquid flow or large (industrial) scale liquid reservoir and release the test liquid after the analysis is concluded to an outlet. The analysis system is in fluid communication with the large (industrial) scale liquid flow or the large (industrial) scale liquid reservoir.

According to another general aspect of the present disclosure, the analysis system is an on-site analysis system. The term "on-site" describes that the analysis of the test liquid is conducted in the close vicinity, for example less than 100 m or even less than 30 m, of the large (industrial) scale liquid flow or the large (industrial) scale liquid reservoir to be analysed. The analysis system is not intended as an off-site laboratory for analysis of previously collected test liquids.

According to another general aspect of the present disclosure, the analysis system is a real-time analysis system. The term "real-time" describes that the measurement and the analysis of the test liquid are concluded rapidly, and the user is provided with information on the analysis results for the test liquid rapidly, for example within less than 10 minutes, and preferably less than 1 minute.

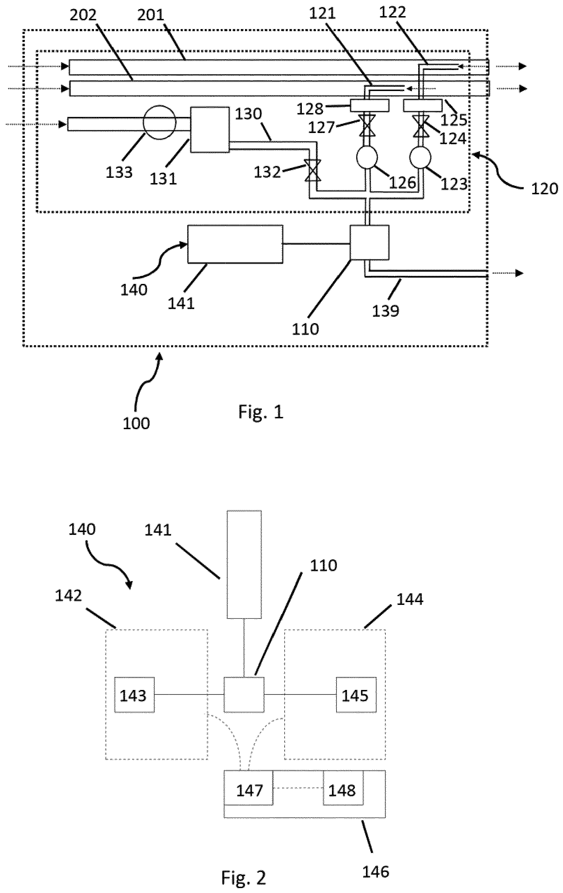

Figure 1 schematically illustrates an analysis system 100 for analysing of components in a test liquid according to an embodiment of the present disclosure. The analysis system comprises a sample chamber 110, a liquid supply system 120, a spectroscopy system 140, and a controller (not displayed in Figure 1).

The liquid supply system 120 is adapted for supplying the test liquid to the sample chamber 110 and for supplying a cleaning liquid to the sample chamber 110. The liquid supply system 120 is fluidly and/or mechanically connectable or connected to a main stream 201, 202 or the liquid reservoir to be tested. In the embodiment illustrated in Figure 1, the liquid supply system 120 is fluidly connected to a first main stream 201 and a second main stream 202. For example, the first main stream 201 may be a sewage water inflow stream (e.g. before carrying out a sewage water treatment step) and the second main stream 202 may be a sewage water outflow stream (e.g. after carrying out a sewage water treatment step). Further, the liquid supply system 120 is fluidly and/or mechanically connectable or connected to a cleaning liquid supply stream or cleaning liquid supply reservoir (in Figure 1 the cleaning liquid supply is not shown, but indicated by the third dotted arrow from the top on the left-hand side of Figure 1). The liquid supply system 120 may further be fluidly and/or mechanically connectable or connected to an outlet stream or outlet reservoir for releasing the test liquid (in Figure 1 the cleaning outlet is not shown, but indicated by the third dotted arrow from the top on the right-hand side of Figure 1). The main stream and the outlet stream may also be identical in some embodiments.

The liquid supply system 120 is a liquid supply manifold. The liquid supply system includes a plurality of tube or pipe sections suitable for liquids. Each of the pipe sections are preferably in fluid communication with another, unless fluid communication is blocked by a valve system. The liquid supply system 120 is in fluid communication with the sample chamber 110. Further, the liquid supply system 120 includes one or more test liquid supply channels. In Figure 1, the analysis system includes a first and a second test liquid supply channel.

The test liquid supply channel typically includes a branch off channel 121, 122, optionally (downstream of the branch off channel) a test liquid filter 125, 128, and (downstream of the branch off channel and the test liquid filter) a test liquid pump 123, 126. The branch off channel 121,122 may be arranged within the main stream 201, 202 for drawing the test liquid from the main stream 201, 202. The optional test liquid filter 125, 128 is configured for filtering out large scale particles, particularly in case large scale particles are not of interest or unsuitable for the analysis of the test liquid or may potentially damage (e.g. cotton buds) the analysis system. The filters are configured such as to not tamper the results of the analysis of the test liquid (i.e. by only removing large scale objects or particles). Typically, the average pore size of the filters is no more than 50 µm.

The test liquid pump 123, 126 is configured for pumping the test liquid out of the main stream 201 and into the sample chamber 110. The valve system may include a test liquid valve 124, 127. The test liquid valve 124, 127 may be arranged downstream of the branch off channel and the test liquid filter. In some embodiments the test liquid valve 124, 127 is arranged downstream of the test liquid pump 123, 126, in others upstream.

Figure 1 displays a first test liquid supply channel with a first branch off channel 121 arranged within a first main stream 201, a first test liquid filter 128, a first test liquid valve 127 and a first test liquid pump 126. Further, Figure 1 illustrates a second test liquid supply channel with a second branch off channel 122 arranged within a second main stream 202, a second test liquid filter 125, a second test liquid valve 124 and a second test liquid pump 123.

The liquid supply system 120 typically includes a cleaning liquid supply branch 130. The cleaning liquid supply branch 130 typically includes an upstream opening, optionally a heater 131, and optionally a security valve 133, and a cleaning liquid pump (not shown in Figure 1). The upstream opening may be arranged within the cleaning liquid supply stream or cleaning liquid supply reservoir for drawing in the cleaning liquid.

The heater 131 is arranged downstream of the upstream opening and is configured for heating the cleaning liquid before the cleaning liquid is supplied to the sample chamber 110. The heater 131 is configured for heating the cleaning liquid to a temperature of at least 50 °C, preferably at least 60 °C, and more preferably at least 80 °C. The inventors observed that cleaning the analysis system with heated cleaning liquid facilitates the cleaning process substantially and reduces the necessity for using chemicals for cleaning the liquid supply system or the sample chamber.

The cleaning liquid pump is configured for pumping the cleaning liquid out of the cleaning liquid supply stream or cleaning liquid supply reservoir and into the sample chamber 110. The valve system may include a cleaning liquid valve 132. The cleaning liquid valve 132 may be arranged downstream of the heater 131 and optionally downstream of the cleaning liquid pump.

The liquid supply system 120 may further include an outlet 139 in fluid communication with the sample chamber 110. The outlet 139 may be in fluid communication with the outlet stream or outlet reservoir for releasing the test liquid. Alternatively, the outlet may be also be in fluid communication with the main stream 201, 202 in some embodiments. The outlet 139 may also include an outlet valve (not shown in Figure 1).

The valve system 124, 127, 132 is configured for opening and closing a test liquid flow of the test liquid to the sample chamber 110, for opening and closing a cleaning liquid flow of the cleaning liquid to the sample chamber 110; and optionally for opening and closing the outlet valve.

The controller is adapted to control the liquid supply system 120, in particular each of the pumps of the liquid supply system 120 and the valve system 124, 127, 132. The controller is adapted to control the spectroscopy system 140 (which will be described later on).

The controller is adapted for carrying out repeated analysis cycles with rest periods between the analysis cycles. The rest periods may also be considered as cleaning or maintenance cycles. The analysis system 100 is thus configured to carry out analysis cycles on a regular or recurrent basis, e.g. as part of a quality control. Typically, the rest period is carried out between each analysis cycle.

The controlling to carry out the analysis cycle comprises: controlling the valve system 124, 127, 132 to open the test liquid flow for supplying the test liquid to the sample chamber 110; controlling the spectroscopy system 140 (described in more detail later on); and controlling the valve system 124, 127, 132 to close the test liquid flow for stopping the flow of the test liquid to the sample chamber 110. The step of closing the test liquid flow may be carried out before, during or after the step of controlling the spectroscopy system. In other words, the controller may be adapted to provide the test liquid as a continuous flow, i.e. with the spectroscopy system being configured for carrying out a spectroscopic analysis of the test liquid while the test liquid is flowing through the sample chamber 110 or alternatively the controller may be adapted to supply the test liquid to the sample cell, subsequently to close off the test liquid flow and then to control the spectroscopy system 140 to carry out a spectroscopic analysis of the test liquid carry.

The controlling to carry out the rest period comprises controlling the valve system 124, 127, 132 to open the cleaning liquid flow for supplying the cleaning liquid to the sample chamber 110, and controlling the valve system 124, 127, 132 to close the cleaning liquid flow.

A cleaning dwell time of the cleaning liquid in the sample chamber 110 during the rest period is longer than a test dwell time of the test liquid in the sample chamber 110 during the analysis cycle. The (cleaning/test) dwell time is to be understood as the overall duration that the (cleaning/test) liquid dwells or stays in the sample chamber 110 during one (cleaning/test) cycle. According to the present disclosure, the analysis system 100 is configured to limit the test dwell time as much as feasible without impairing or at least without significantly impairing the accuracy of the analysis result. The demanding applications (e.g. sewage water) that the present disclosure relates to can already result in a significant contamination of the sample chamber 110 and/or the liquid supply system 120 after carrying out very few analysis cycles. Contamination of the sample chamber 110 impairs and potentially also distorts the results of the spectroscopic analysis. The inventors found that the cleanliness of the sample chamber 110 can be maintained at an acceptable level over a long period of time by limiting the test dwell time as much as possible and by carrying out extended rest periods (i.e. long cleaning dwell times).

According to an embodiment, the test dwell time of the test liquid in the sample chamber 110 during the analysis cycle is no more than 30 seconds, preferably no more than 20 seconds, and more preferably no more than 10 seconds. In some embodiments, the test dwell time of the test liquid in the sample chamber 110 during the analysis cycle may even be no more than 5 seconds or no more than 3 seconds. Preferably, the controller is configured to conclude the analysis cycle, in particular supply the test liquid, conclude the spectroscopic analysis, and pump out or flush out the test liquid within no more than 30 seconds, preferably within no more than 20, and more preferably within no more than 10 seconds. The cleaning dwell time of the cleaning liquid in the sample chamber during the rest period may be at least 50 seconds, preferably at least 100 seconds, and more preferably at least 300 seconds. In some embodiments, the cleaning dwell time of the test liquid in the sample chamber 110 during the analysis cycle may even be at least 600 seconds. The cleaning dwell time may be advantageously carried out for as long as feasible for the desired application.

In a preferred embodiment, the cleaning dwell time of the cleaning liquid in the sample chamber 110 during the rest period is at least five times, preferably at least 10 times, and more preferably at least 20 times, longer than the test dwell time of the test liquid in the sample chamber 110 during the analysis cycle. In some embodiments, the cleaning dwell time may even be 50 or 100 times longer than the test dwell time.

The inventors have identified further measures which enable maintaining the cleanliness of the sample chamber 110 and/or the liquid supply system 120 at an acceptable level over an extended period of time, thereby preventing the distortion of the spectroscopic analysis. As mentioned above, the liquid supply system 120 may comprise the heater 131 for heating the cleaning liquid before the cleaning liquid is supplied to the sample chamber 110. It was observed that cleaning the analysis system with heated cleaning liquid facilitates the cleaning process substantially and reduces the necessity for using chemical agents for cleaning the liquid supply system 120 or the sample chamber 110. In test runs it was observed that the quantity of contaminants in the sample chamber 110 could be reduced by approximately 30-50% by rinsing the sample chamber 110 once with heated cleaning liquid having a temperature of 50 - 80 °C. Typically, the cleaning liquid is only heated for some of the rest periods, i.e. not every rest period is carried out with heated cleaning liquid.

Additionally, or alternatively, the liquid supply system 120 may include a pressuriser for pressurising the cleaning liquid, and a nozzle system adjacent to the sample chamber 110 for directing the pressurised cleaning liquid toward the sample cell 110, in particular towards a transparent wall portion of the sample cell 110.

The cleaning liquid is preferably chemically neutral and/or detergent-free. Chemically neutral is to be understood as approximately pH neutral. In a preferred embodiment, the cleaning liquid is free of chemical additives. Chemical additives are to be understood in this context as any substances added for the purpose of cleaning, disinfecting, or maintenance of the sample chamber 110.

Avoiding additives in the cleaning liquid enables limiting the costs of the rest periods and inhibits additives from potentially precipitating or potentially forming precipitates together with contaminants in the sample chamber 110, which may not be easily removable from the sample cell 110 and may negatively impact the accuracy of subsequent analysis cycles. Further, typical additives used for cleaning are detrimental to the environment and toxic. In a preferred embodiment, the cleaning liquid comprises water, and preferably essentially consists or even consists of water. Typically, the water is distilled water.

According to an embodiment, the analysis system 100 further includes an intransparent housing (not shown in Figure 1). The sample chamber 110 is fully arranged inside the intransparent housing. The liquid supply system 120 and/or the spectroscopy system 140 may also be arranged inside the intransparent housing. Preferably, the liquid supply system 120 and/or the spectroscopy system 140 are largely or even fully arranged within the intransparent housing. The intransparent housing is intransparent or configured to block radiation from the outside from impinging on the sample chamber 110 (and optionally on the liquid supply system 120 and/or the spectroscopy system 140) in the entire visible range, and preferably also the UV range having a wavelength of at least 200 nm, and/or the near infrared range having a having a wavelength of up to at least 1500 nm. Preferably, the intransparent housing is adapted for shielding against the entire wavelength range in which sunlight is significantly emitted. The inventors observed that the level of contaminants, in particular the quantity of biological contaminants, such as algae, may be significantly reduced by the provision of the intransparent housing. The intransparent housing therefore further facilitates in operating the analysis system 100 for an extended period of time without the need for servicing the analysis system 100. It was observed that algae growth could be largely or fully suppressed while operating the analysis system 100 for at least two weeks due to the provision of the intransparent housing. Even after four weeks of operation algae growth was modest.

According to an embodiment, the test liquid is provided as a branch-off from a main stream 201, 202, and the liquid supply system 120 comprises a branch-off channel 121, 122 for branching off the test liquid from the main stream 201, 202 and for supplying the test liquid to the sample chamber 110. The branch-off channel 121, 122 may be arranged in counter current with the flow of the main stream 201, 202. An example of this embodiment is illustrated in Figure 1. The flow of the first and the second main stream 201, 202 is opposite or reversed with respect to a flow direction of the first and second branch off channels 121, 122. The test liquid pump 123, 126 may be a reverse pump adapted to draw in the test liquid in a reverse direction, i.e. opposite to a normal flow direction of the main stream 201, 202. The inventors observed that arranging the branch-off channel 121, 122 in counter current allows for reducing the amount of large scale objects or particles from being drawn into the liquid supply system 120. The counter current arrangement may therefore be particularly advantageous when the liquid supply system 120 includes filters. The reduced amount of large scale objects being drawn in to the liquid supply system 120 may protect or increase the lifetime of the filters.

The sample chamber 120 is adapted for holding the test liquid and the cleaning liquid, and is in fluid communication with the liquid supply system 120. The sample chamber 120 includes at least one transparent wall portion. The transparent wall portion is transparent for the wavelength range of an excitation beam of the spectroscopy system 140. Typically, the transparent wall portion is transparent for at least a wavelength range of 190 nm to 300 nm. The sample chamber 110 may include a second or further transparent wall portion for allowing the excitation beam to exit the sample chamber 110 and/or for allowing radiation emitted by the test liquid to reach a measurement set-up, and in particular a detector, of the spectroscopy system 140. The second or further transparent wall portion may be transparent for at least a wavelength range of 190 nm to 300 nm, or even at least a wavelength range of 190 nm to 600 nm. The second or further transparent wall portion may be arranged in a wall portion of the sample chamber 110 which is opposite to the transparent wall portion, or arranged in a side wall of sample chamber 110. The nozzle system for directing the pressurised cleaning liquid toward the sample cell 110 may also be arranged in a side wall of the sample chamber 110. The cleanliness of the transparent wall portion and, if present, the second or further wall portions, can affect the accuracy of the spectroscopic analysis severely and may cause unreliable results in case the transparent wall portion contains deposits or biofilms, which may result in increased noise or interference signals in the spectroscopic analysis, such as scattered light or photoluminescence. The rest periods may considerably reduce the amount of depositions and biofilms on the first or further transparent wall portions.

The spectroscopy system 140 is only indicated together with a radiation source 141 in Figure 1. Figure 2 schematically illustrates the spectroscopy system 140 in more detail according to an embodiment of the present disclosure.

The spectroscopy system 140 is provided for spectroscopic analysis of the test liquid being held in the sample chamber 110. The spectroscopy system is an optical spectroscopy system. The spectroscopy system 140 includes a radiation source 141 for irradiating the test liquid in the sample chamber 110 by an excitation beam penetrating through the transparent wall portion. In its broadest sense, the radiation source 141 may emit radiation in the UV spectral range, in the visible range or in the near infrared spectral range. According to a preferred embodiment the radiation source 141 emits radiation in the UV range, and more preferably in the deep-UV range. The term "deep-UV" describes radiation with a wavelength between 190 nm and 270 nm. The excitation source 141 preferably emits radiation with a wavelength between 220 nm and 250 nm, and most preferably the wavelength is at least 240 nm and/or at most 250 nm. The radiation emitted by the excitation source 141 may be narrow in its wavelength range, i.e. the Full width at half maximum (FWHM) may be substantially less than 1 nm. The excitation source 141 may be a laser source, wherein the laser source is preferably selected from the group consisting of a microchip laser unit, a solid state laser, a gas laser, or a hollow cathode ion laser.

The spectroscopy system 140 includes a first measurement set-up 142 and/or a second measurement set-up 144, and optionally a third or further measurement set-ups.

In a preferred embodiment, as illustrated in Figure 2, the spectroscopy system 140 includes the first measurement set-up 142 for measuring photoluminescence radiation, and/or a second measurement set-up 144 for measuring a Raman spectrum.

The second measurement set-up 144 is configured for measuring inelastically scattered radiation caused by the excitation source 141 and having been inelastically scattered by the test liquid. The second measurement set-up 144 may include a second detector 145. The second detector 145 may be any spectrometer, in particular the second detector 145 may be a Michelson spectrometer or a Fourier-transform spectrometer. Advantageously, Raman spectroscopy exhibits a low sensitivity with respect to H₂O and is therefore suitable for analysing components and/or contaminants in aqueous test liquids. By irradiating the test liquid with a wavelength in the deep-UV wavelength range, the intensity of Raman signals can be considerable due to the intensity of inelastically scattered radiation being nonlinearly dependent on the radiation frequency or photon energy. Thus, Raman spectroscopy carried out in the deep-UV can result in signal intensities which are orders of magnitude higher than signal intensities observed in "classic" Raman measurements, which commonly employ excitation sources with wavelengths in the visible to near-infrared wavelength range. Advantageously, the wavelength of the radiation source 141 can be chosen such that resonant Raman spectroscopy can be realised, which may result in even more considerable signal intensities. Therefore, the second measurement set-up 144 based on deep-UV Raman spectroscopy can be highly sensitive and therefore especially suitable for detecting components or contaminants with very low concentrations.

One of the drawbacks of carrying out Raman measurements at wavelengths shorter than the commonly employed visible to near-infrared wavelength range may be the occurrence of fluorescence radiation, wherein fluorescence signal intensities can be substantially greater than Raman signal intensities. However, empirically it was found that fluorescence signal intensities are very moderate or even negligible for most components when radiation sources 141 with a wavelength in the deep-UV are employed, preferably with wavelengths no larger than 250 nm. Suitable radiation sources 141 with wavelengths in the deep-UV wavelength range and in particular with wavelengths below 250 nm, which generate sufficient photon flux have only become technically feasible recently.

The first measurement set-up 142 is suitable for measuring photoluminescence radiation emitted by the test liquid as a result of absorption of radiation by the test liquid, and in particular for detecting radiation with a wavelength between 260 nm and 600 nm. The first measurement set-up 142 may include a first detector 143. The first detector 143 may be any spectrometer, in particular the first detector 143 may be a Michelson spectrometer or a Fourier-transform spectrometer, or an optical grating. In an alternative embodiment, the spectroscopy system 140 may include the first detector 143 and preferably not a second detector 144, wherein the first detector 143 is the detector for the first measurement set-up 142 and the second measurement set-up 144 (not shown in Figure 2). Carrying out the measurement for the first measurement set-up 142 and second measurement set-up 144 with the radiation source 141 and/or with the first detector 143 may enable reducing the time to conclude the quantitative and qualitative analysis of the test liquid substantially.

In some embodiments, the spectroscopy system 140 may further include a third measurement set-up. The third measurement set-up is configured for performing at least one analysis technique selected from the group consisting of UV-VIS absorption spectroscopy, infrared absorption spectroscopy, infrared emission spectroscopy, magnetic resonance imaging based measurement of relaxation times, viscosity measurements, measurement of optical properties including odour and/or refractive index and/or taste, gas chromatography, hyperspectral remote sensing, cytometry, pH measurement, total organic carbon measurements (TOC), dissolved organic carbon measurement (DOC), chemical oxygen demand measurement (COD), measurement of atmospheric conditions, conductivity measurements, laser-induced breakdown spectroscopy (LIBS) and volatile organic compounds measurements (VOC). The measurement of atmospheric conditions may comprise the measurement of ambient air temperature, precipitation or humidity. Further, additional properties of the liquid such as density, melting point, sublimation point, boiling point, solubility, acidity, basicity, thermal conductivity, net charge, specific heat capacity, molar entropy, isotope fractionation, surface tension, pressure, specific resistance, compressibility, wettability, reactivity and levelling grade can be physical measurands utilised by the third measurement set-up.

According to an embodiment of the present disclosure, the spectroscopy system 140 may further comprise a signal processing unit 146. As a result of conducting a measurement in the second measurement set-up 144 a data array R(λ,l) is generated. As a result of conducting a measurement in the first measurement set-up 142 a data array A(λ,l) is generated. The signal processing unit 146 comprises a pre-processing unit 147 configured for receiving data generated by the first measurement set-up 142 and by the second measurement set-up 144. The pre-processing unit 147 may receive data due to an interconnection between each of the first and second measurement set-ups 142, 144 and the pre-processing unit 147 and may be based on a WiFi connection, a Bluetooth connection, a physical wire or on a printed circuit board. Furthermore, in embodiments comprising a third measurement set-up or possibly even further measurement set-ups, the pre-processing unit 147 may also be configured for receiving data generated by the third measurement set-up and/or further measurement set-ups.

The signal processing unit 146 may further include a machine learning algorithm 148 for determining, from the data generated by the first measurement set-up 142 and by the second measurement set-up 144, qualitative and quantitative information regarding the composition of the test liquid. The data may be analysed by the machine learning algorithm 148 employing a Convolutional Neural Network (CNN) or an artificial neural network (ANN) or principle component analysis (PCA) or any other statistical method suitable for recognising features and/or patterns. The machine learning algorithm 148 may be configured for background noise reduction and/or noise subtraction. The background noise reduction and/or noise subtraction may be carried out automatically and/or implicitly by the machine learning algorithm 148, preferably by the Convolutional Neural Network, based on a layer for feature recognition. This is contrary to typical analysis methods, which are based on modelling background noise by means of a mathematical function and subtracting this mathematical function from the data prior to processing the data further. The signal processing unit 146 according to embodiments of the present disclosure may be configured for simultaneous background noise reduction and/or noise subtraction and one or more further data processing steps.

The machine learning algorithm 148 may carry out an automatic feature recognition, wherein the machine learning algorithm 148 can be trained on raw, uncorrected data, i.e. without carrying out a background noise reduction and/or noise subtraction. Contrary to this, classical data analysis is based on manually crafted background noise removal and feature engineering. According to an embodiment, the machine learning algorithm 148 may employ a Convolutional Neural Network (CNN), wherein the Convolutional Neural Network (CNN) comprises the following layers: a deep network with input layer, a plurality of convolution layers for automatic feature recognition and a plurality of fully connected layers for classification with a final output layer. Furthermore, in embodiments comprising a third measurement set-up or possibly further measurement set-ups, the data generated by the third measurement set-up and/or possible further measurement set-ups may be used as additional input for the machine learning algorithm 148, which advantageously can help to increase a prediction precision of the automatic feature recognition. The machine learning algorithm can be improved and/or extended and/or replaced with a different algorithm or model, for example if new data becomes available or new anomalies are detected, on a regular base by a software update. Software updates may be automatic updates of the Convolutional Neural Network facilitated by a data update comprising loading a new configuration and/or definition, for example based on the open neural network exchange (ONNX) format or a custom-made format. A simple data update may advantageously circumvent the need for installing new software. Further details of features of the machine learning algorithm 148 may be found in Liu et al. (Analyst, 2017, 142, 4067-4074) and/or Zou et al. (Scientific Reports 7, 2017, Article number: 6186), which are both herein incorporated by reference in their entirety.

Historical data, in particular related to atmospheric conditions, as well as weather forecasts or atmospheric conditions measured by the third or a further measurement set-up or other environmental data may be used as additional input for the machine learning algorithm 148, which may help to increase the prediction precision regarding the appearance of possible components, in particular contaminants, in the test liquid. After processing of the data by the machine learning algorithm 148, a categorization and interpretation may be conducted by the signal processing unit 146. An additional analysis method may be based on measuring and utilising a baseline spectrum analysed by classical chemical analysis and the signal processing unit 146 continuously comparing the baseline spectrum with a measurement of the test liquid to detect any deviations automatically, for instance in order to make adjustments in case of a water purification process, such as changing the amount of oxygen added. Further, the baseline spectrum may be utilised to measure quantitative changes of components in the test liquid.

In samples, wherein multiple components contribute to a measurement, a plurality of signals may overlap and thus encumber the interpretation of the measurement. Advantageously, by employing the machine learning algorithm 148 the feature recognition may result in reliable qualitative and quantitative information for each individual component in the test liquid.

In order for the analysis of the data, generated by the second measurement set-up 144, with the machine learning algorithm 148 to yield reliable qualitative and quantitative information it is highly advantageous if the contributions of the components and/or contaminants in the test liquid to the signals measured by the second measurement set-up 144 predominantly originate from inelastic scattering and therefore other possible contributions, in particular fluorescence emission, are substantially absent. In that respect one advantage of the spectroscopy system 140 according to some embodiments is based on the combinatory effect of employing the machine learning algorithm 148 with the second measurement set-up 144 in connection with a deep-UV radiation source 141, preferably with wavelengths no larger than 250 nm due to fluorescence signal intensities being very moderate or even negligible for most components.

The analysis system 100 according to embodiments of the present disclosure may be chemically selective and yield quantitative results regarding the concentration of components in the test liquid even when a plurality of different components are present in the test sample, without the need for separation of individual components of the test sample prior to carrying out measurements with the analysis system 100, which may reduce the amount of time and effort required to analyse the test liquid. Advantageously, the analysis system 100 may substantially reduce the time required to carry out an analysis of the test sample and can be configured for on-site measurement of the test sample. Furthermore, due to short measurement times for the first and second measurement set-ups 142, 144 and rapid analysis of the data by the signal processing unit 146, the analysis of the test sample may be carried out, and in particular displayed, in real-time.

The controller is adapted for controlling the spectroscopy system 140 to irradiate the test liquid in the sample chamber 110 by the excitation beam through the transparent wall portion. Further the controller is adapted to carry out the spectroscopic analysis of the test liquid being held in the sample chamber 110; and adapted to control any of the other aforementioned components of the spectroscopy system 140.

According to an embodiment, the radiation source 141 is configured to disinfect the sample chamber 110. The radiation source 141 may contribute to disinfecting the sample chamber 110 during the analysis cycle. The spectroscopy system 140 may further include one or more auxiliary radiation sources configured to disinfect the sample chamber 110. The auxiliary radiation source may emit radiation in the UV range, and in particular having a wavelength between 190 nm and 320 nm. The auxiliary radiation source is typically a radiation source which is substantially cheaper than the radiation source 141. For example, the auxiliary radiation source may be an LED. The spectroscopy system 140 may also include a plurality of auxiliary radiation sources. The controller may be configured to switch between the plurality of auxiliary radiation sources in case one of the auxiliary radiation sources malfunctions.

The controller may be configured to control the spectroscopy system 140 to irradiate the sample chamber 110 when the test liquid is not contained in the sample chamber 110 and/or when the cleaning liquid is contained in the sample chamber 110 during rest periods. In other words, the sample cell may be further disinfected during rest periods to avoid growth of biofilms, algae growth, bacteria growth and the like. Irradiation of the sample chamber 110 may be carried out during the rest periods by means of the radiation source 141. However, in case the auxiliary radiation source is present, it may be significantly cheaper to employ the auxiliary radiation source for disinfecting the sample chamber 110.

According to an embodiment, the analysis system 100 further includes a diagnostic system for diagnosing a level of cleanliness of the sample chamber 110. The diagnostic system may be configured for determining cleanliness data indicative of the cleanliness of the sample chamber 110. The diagnostic system may utilise one or more of the aforementioned measurement set-ups for determining cleanliness data.

The controller may be configured for controlling the rest period in dependence on the cleanliness data. For example, in case the cleanliness data indicates insufficient cleanliness, i.e. the level of cleanliness is above a predetermined threshold level of cleanliness, the controller may be configured to carry out one or more of the aforementioned steps to increase the level of cleanliness. For example, the controller may be adapted to carry out one or more of the following steps:
1) increase the duration of the rest period and/or carry out an additional rest period before carrying out a subsequent analysis cycle; and/or
2) control, if present, the heater 131 to rinse the sample chamber 110 with heated cleaning liquid; and/or
3) control, if present, the pressuriser and/or the nozzle system for directing the pressurised cleaning liquid towards the sample cell 110, in particular towards the transparent wall portion; and/or
4) control the radiation source 141, and/or control, if present, the auxiliary radiation source to irradiate the sample chamber 110 during the rest periods to facilitate disinfecting the sample chamber 110 or removing biofilms in the sample chamber 110.

The controller may be configured to carry out and/or repeat one or more of steps 1) to 4) until the level of cleanliness is below the predetermined threshold level of cleanliness. The controller may also be configured for omitting any of the aforementioned steps or reducing the duration of the rest periods in case the level of cleanliness is substantially below the predetermined threshold level of cleanliness. In case the level of cleanliness is not below the predetermined threshold level of cleanliness even after numerous rest periods, the controller may be configured to communicate a warning to a user, e.g. by means of the software or a warning LED.

According to an embodiment, the analysis system 100 is a waste water analysis system 100 and the test liquid is waste water. The analysis system 100 is particularly suitable for maintaining a high level of cleanliness even in the very demanding field of waste or sewage water and can be automatically operated long term without the need to service or replace components of the analysis system, such as the sample cell 110 or the liquid supply system 120. Furthermore, the spectroscopic analysis can be carried out at any purification stage, thereby enabling monitoring the concentration of contaminants such as micropollutants, phosphor compositions or nitride. The analysis system 100 may be suitable for the analysis of water in water pipes, such as tap water pipes, sanitary pipes or heating pipes in houses or in the ground or water pipes for process heating, process cooling as well as commercial cooling systems and building cooling systems.

According to an embodiment, the analysis system 100 is a beverage and food water analysis system 100 and the test liquid is beverage water and/or food water. Similarly, as discussed above for the waste water industry, the analysis system 100 may be beneficial for analysing industrial production of food and/or beverages and/or drugs.

## Claims

1. An analysis system (100) for analysing of components in a test liquid, comprising:
- a sample chamber (110) being adapted for holding the test liquid to be analysed, the sample chamber (110) having a transparent wall portion;
- a liquid supply system (120) for supplying the test liquid to the sample chamber (110);
- a spectroscopy system (140) for spectroscopic analysis of the test liquid being held in the sample chamber (110), the spectroscopy system (140) including a radiation source (141) for irradiating the test liquid in the sample chamber (110) by an excitation beam penetrating through the transparent wall portion; and
- a controller,
wherein the liquid supply system (120) is further adapted for supplying a cleaning liquid to the sample chamber (110), and
wherein the liquid supply system (120) comprises a valve system (124, 127, 132) for opening and closing a test liquid flow of the test liquid to the sample chamber (110), and for opening and closing a cleaning liquid flow of the cleaning liquid to the sample chamber (110), and
wherein the controller is adapted for controlling the analysis system (100) to carry out repeated analysis cycles with rest periods between the analysis cycles,
wherein the controlling to carry out the analysis cycle comprises:
- controlling the valve system (124, 127, 132) to open the test liquid flow for supplying the test liquid to the sample chamber (110);
- controlling the spectroscopy system (140) to irradiate the test liquid in the sample chamber (110) by the excitation beam through the transparent wall portion, and to carry out the spectroscopic analysis of the test liquid being held in the sample chamber (110); and
- controlling the valve system (124, 127, 132) to close the test liquid flow for stopping the flow of the test liquid to the sample chamber (110), and
wherein the controlling to carry out the rest period comprises:
- controlling the valve system (124, 127, 132) to open the cleaning liquid flow for supplying the cleaning liquid to the sample chamber (110);
- controlling the valve system (124, 127, 132) to close the cleaning liquid flow; and
wherein a cleaning dwell time of the cleaning liquid in the sample chamber (110) during the rest period is longer than a test dwell time of the test liquid in the sample chamber (110) during the analysis cycle.

2. The analysis system according to claim 1, wherein the test dwell time of the test liquid in the sample chamber (110) during the analysis cycle is no more than 30 seconds, preferably no more than 20 seconds, and more preferably no more than 10 seconds.

3. The analysis system according to any one of the preceding claims, wherein the cleaning dwell time of the cleaning liquid in the sample chamber (110) during the rest period is at least five times, preferably at least 10 times, and more preferably at least 20 times, longer than the test dwell time of the test liquid in the sample chamber (110) during the analysis cycle.

4. The analysis system according to any one of the preceding claims, wherein the radiation emitted by the radiation source (141) has a wavelength between 190 nm and 270 nm, preferably between 220 nm and 250 nm, and more preferably between 240 nm and 250 nm; and optionally wherein the radiation source (141) is a laser source.

5. The analysis system according to any one of the preceding claims, wherein the spectroscopy system (140) comprises
- a first measurement set-up (142) for measuring photoluminescence radiation, in particular wherein the first measurement set-up (142) is suitable for detecting radiation with a wavelength between 260 nm and 600 nm; and/or
- a second measurement set-up (144) for measuring a Raman spectrum.

6. The analysis system according to any one of the preceding claims, wherein the cleaning liquid comprises water, preferably essentially consists of water, and more preferably essentially consists of distilled water.

7. The analysis system according to any one of the preceding claims, wherein the cleaning liquid is chemically neutral and/or detergent-free, in particular free of chemical additives.

8. The analysis system according to any one of the preceding claims, wherein the liquid supply system (120) comprises a heater (131) for heating the cleaning liquid before the cleaning liquid is supplied to the sample chamber (110), and/or wherein the cleaning liquid has a temperature of at least 50 °C, preferably at least 60 °C.

9. The analysis system according to any one of the preceding claims, further comprising an intransparent housing, wherein the sample chamber (110) is fully arranged inside the housing.

10. The analysis system according to any one of the preceding claims, wherein the radiation source (141) is configured to disinfect the sample chamber (110); and/or the spectroscopy system (140) further comprising one or more auxiliary radiation sources configured to disinfect the sample chamber (110), in particular wherein the radiation emitted by the one or more auxiliary radiation sources has a wavelength between 190 nm and 320 nm.

11. The analysis system according to any one of the preceding claims, wherein the controller is configured to control the spectroscopy system (140) to irradiate the sample chamber (110) when the test liquid is not contained in the sample chamber (110) and/or when the cleaning liquid is contained in the sample chamber (110) during rest periods and/or when the spectroscopic analysis is not carried out.

12. The analysis system according to any one of the preceding claims, wherein the test liquid is provided as a branch-off from a main stream (201, 202), and the liquid supply system (120) comprises a branch-off channel (121, 122) for branching off the test liquid from the main stream (201, 202) and for supplying the test liquid to the sample chamber (110); and wherein the branch-off channel (121, 122) is arranged in counter current with the flow of the main stream (201, 202).

13. The analysis system according to any one of the preceding claims, wherein the analysis system (100) is a waste water analysis system (100) and wherein the test liquid is waste water.

14. The analysis system according to any one of claims 1 to 12, wherein the analysis system (100) is a beverage and food water analysis system (100) and wherein the test liquid is beverage water and/or food water.

15. A method for analysing of components in a test liquid, comprising an analysis system (100) having
- a sample chamber (110) adapted for holding the test liquid to be analysed,
- a liquid supply system (120) for supplying the test liquid to the sample chamber (110) for supplying a cleaning liquid to the sample chamber (110); and
- a spectroscopy system (140) for spectroscopic analysis of the test liquid being held in the sample chamber (110), the spectroscopy system (140) including a radiation source (141) for irradiating the test liquid in the sample chamber (110) by an excitation beam;
the method comprising carrying out repeated analysis cycles with rest periods between the analysis cycles,
the step of carrying out the analysis cycle comprising:
- Opening a test liquid flow for supplying the test liquid to the sample chamber (110);
- Irradiating the test liquid in the sample chamber (110) by the excitation beam through a transparent wall portion in the sample chamber (110), and carrying out the spectroscopic analysis of the test liquid being held in the sample chamber (110); and
- Closing the test liquid flow for stopping the flow of the test liquid to the sample chamber (110), and
the step of carrying out the rest periods comprising:
- Opening a cleaning liquid flow for supplying the cleaning liquid to the sample chamber (110); and
- Closing the cleaning liquid flow;
wherein a cleaning dwell time of the cleaning liquid in the sample chamber (110) during the rest period is longer than a test dwell time of the test liquid in the sample chamber (110) during the analysis cycle.
